# EUROPEAN PATENT SPECIFICATION

(11) **EP 2 450 977 B1**
(45) Date of publication and mention of the grant of the patent: **10.06.2015**
(21) Application number: 11185371.9
(22) Date of filing: 17.10.2011
(51) Int. Cl.: H01M 2/00, H01M 10/04

(54) **Rechargeable Battery**
Wiederaufladbare Batterie
Batterie rechargeable

(30) Priority: 03.11.2010 US 409728 P; 08.08.2011 US 201113205113
(43) Date of publication of application: 09.05.2012
(73) Proprietor: Samsung SDI Co., Ltd., Gyeonggi-do (KR); Robert Bosch GmbH, 70442 Stuttgart (DE)
(72) Inventor: Kim, Duk-Jung, Yongin-si (KR); Kim, Joong-Heon, Yongin-si (KR)
(74) Representative: Gulde & Partner

(56) References cited:
- US-A1- 2009 280 406
- US-A1- 2010 151 317
- US-A1- 2010 167 120

## Description

### BACKGROUND

### 1. Field

This document relates to a rechargeable battery suppressing cell swelling.

### 2. Description of the Related Art

A rechargeable battery, unlike a primary battery, repeatedly performs charge and discharge. A small capacity rechargeable battery can be used in small and portable electronic devices, such as a mobile phone, a laptop computer, and a camcorder, and a large capacity rechargeable battery can be used as a power source for driving the motor of a hybrid vehicle.

Recently, a high power rechargeable battery using a non-aqueous electrolyte of a high energy density has been developed. The high power rechargeable battery has a plurality of rechargeable batteries coupled in series, and it can be used to drive the motor of a device requiring high power, such as an electric vehicle.

The rechargeable battery includes an electrode assembly configured to have a positive electrode and a negative electrode provided on respective sides of a separator, a casing configured to house the electrode assembly, a cap plate configured to close and seal the opening of the casing, and electrode terminals configured to penetrate a cap plate and installed therein and electrically connected to the electrode assembly.

Since charge and discharge are repeated in the electrode assembly, excessive heat is generated or an electrolyte solution is decomposed. Accordingly, the intervals between the positive electrode, the separator, and the negative electrode are widened, and the electrode assembly swells. Consequently, cell swelling is generated.

The above information disclosed in this Background section is only for enhancement of understanding of the background of the described technology and therefore it may contain information that does not form the prior art that is already known in this country to a person of ordinary skill in the art.

### SUMMARY

The described technology has been made in an effort to provide a rechargeable battery having an advantage of suppressing swelling of an electrode assembly by maintaining gaps between a positive electrode, a separator, and a negative electrode within a predetermined range.

Another aspect of the present invention provides a rechargeable battery having an advantage of suppressing cell swelling by suppressing the generation of gas when the battery is first used.

A rechargeable battery according to an exemplary embodiment includes an electrode assembly configured to have a positive electrode and a negative electrode provided on both sides of a separator, a casing housing the electrode assembly, a cap plate coupled to the opening of the casing, a first electrode terminal and a second electrode terminal disposed in the cap plate and connected to the electrode assembly, and one or more elastic members disposed outside of a space defined between the casing and the electrode assembly.

In accordance with an exemplary embodiment, the elastic member(s) are disposed in the space between the electrode assembly and the casing, and the electrode assembly is supported at a predetermined pressure by means of reaction force of the casing. Accordingly, there is an advantage in that the gap between the positive electrode, the separator, and the negative electrode is maintained within a predetermined range from the first time when the battery is used. The elastic member(s) are disposed outside of the space between the electrode assembly and the casing, and thus expansion force generated at a central portion of the electrode assembly is distributed outside the casing. Accordingly, even after lapse of a predetermined time, the gap between the positive electrode, the separator, and the negative electrode can be maintained within a predetermined range. Accordingly, the swelling of the electrode assembly and cell swelling can be prevented.

The rechargeable battery of the invention comprises an electrode assembly; a case for accommodating the electrode assembly therein; and a first elastic member which is provided between the electrode assembly and the case, wherein a section through the first elastic member from an electrode assembly facing side to a case facing side has a tapered outer form with a correspondingly tapered hole in its center wherein the tapered hole and the tapered outer form have smaller widths on the electrode assembly facing side than on the case facing side.

The first elastic member can have an elliptical shape or a rectangular shape with curved edges, and/or the first elastic member can have the form of a convex closed loop, and/or the form of a disrupted or segmented loop, and/or is bulging inwards towards the electrode assembly.

In the rechargeable battery of the invention, the first elastic member may contact an inner wall of the case and/or an outer wall of the electrode assembly.

The first elastic member can be provided parallel to a side wall of the electrode assembly and parallel to a side wall of the case, wherein the first elastic member provides a resilient force perpendicular to the side wall of the electrode assembly and the side wall of the case.

In the rechargeable battery of the invention, the normal projection of the center point of the first elastic member may be located within the central area of a side wall of the electrode assembly the first elastic member faces. The height of the first elastic member in an uncompressed state can be equal to or larger than the size of a gap between the electrode assembly and the case where the first elastic member is provided in.

The first elastic member of the rechargeable battery of the invention can have inclined side walls such that its cross section parallel to the side wall it faces decreases from the case towards the electrode assembly.

The inner circumference of the first elastic member can be provided with elastic projections projecting into the central hole of the first elastic member and contacting the electrode assembly.

The first elastic member of the rechargeable battery of the invention is formed of a metal, preferably stainless steel or a copper alloy, or consists of an insulating material, preferably the insulating layer is an insulating resin, poly-vinyl and/or plastic.

The rechargeable battery of the invention can comprise a second elastic member which can be provided between the first elastic member and the electrode assembly. The second elastic member can have a convex shape bulging inward toward the electrode assembly or outward toward the first elastic member.

In the rechargeable battery of the invention, the first elastic member and/or the second elastic member may be a Belleville spring or plate spring or slotted disk spring.

Preferably, the contact points of the first elastic member and the case are located within a periphery of a normal projection of the top and bottom ends of the electrode assembly.

The first and/or second elastic members can be provided on two opposing sides of the electrode assembly.

In particular, the contact points of the first elastic member and the case and/or the contact points of the first or second elastic member and the electrode assembly of the rechargeable battery of the invention may be distributed over the side wall of the electrode assembly the elastic members face, and/or may form a line, or a closed loop, or an interrupted or segmented loop.

### BRIEF DESCRIPTION OF THE DRAWINGS

FIG. 1 is a perspective view of a rechargeable battery according to a first exemplary embodiment;
FIG. 2 is a cross-sectional view taken along line II - II of FIG. 1;
FIG. 3 is a cross-sectional view taken along line III-III of FIG. 2;
FIG. 4 is a lateral view showing a state in which electrode assemblies and a negative electrode current collection lead tab are connected in the rechargeable battery of FIG. 1;
FIG. 5 is a cross-sectional view taken along line V - V of FIG. 1;
FIG. 6 is an exploded perspective view of the electrode assembly and elastic members of FIG. 3;
FIG. 7 is a top plan view of FIG. 6;
FIG. 8 is a cross-sectional view showing the operation of the elastic members disposed between the electrode assembly and a casing;
FIG. 9 is a top plan view showing the arrangement relationship of an electrode assembly and an elastic member in a rechargeable battery according to a second exemplary embodiment;
FIG. 10 is a cross-sectional view of a rechargeable battery according to a third exemplary embodiment;
FIG. 11 is a cross-sectional view of a rechargeable battery according to a fourth exemplary embodiment;
FIG. 12 is a cross-sectional view of a rechargeable battery according to a fifth exemplary embodiment; and
FIG. 13 is a lateral view showing the arrangement of an electrode assembly and an elastic member shown in FIG. 12.

### DETAILED DESCRIPTION

The present invention will be described more fully hereinafter with reference to the accompanying drawings, in which exemplary embodiments of the invention are shown. As those skilled in the art would realize, the described embodiments may be modified in various different ways. Like reference numerals designate like elements throughout the specification.

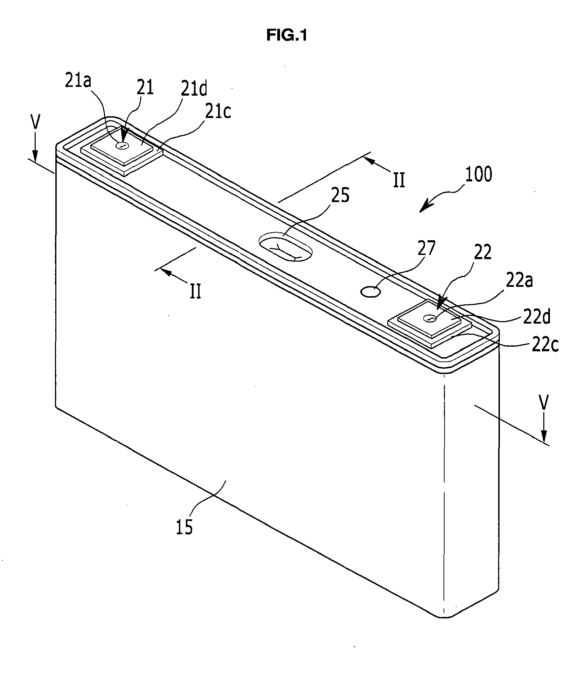

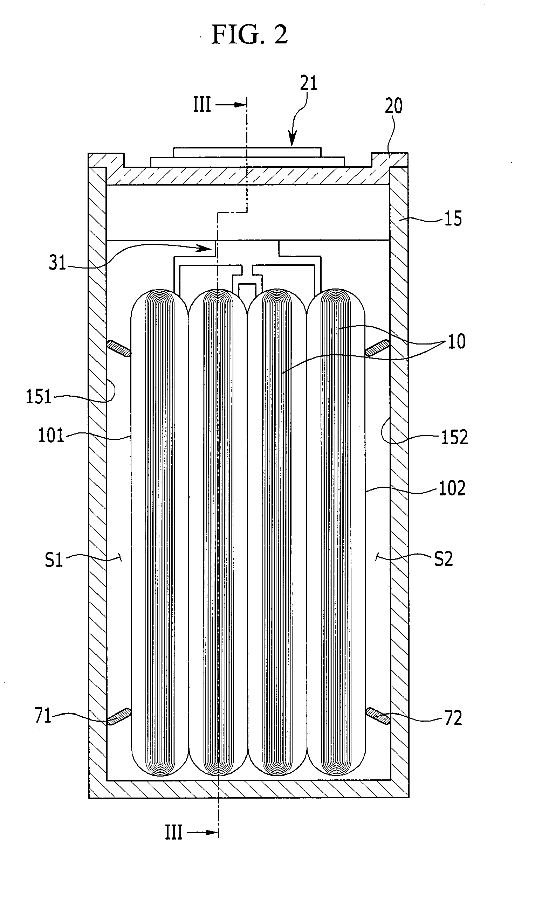

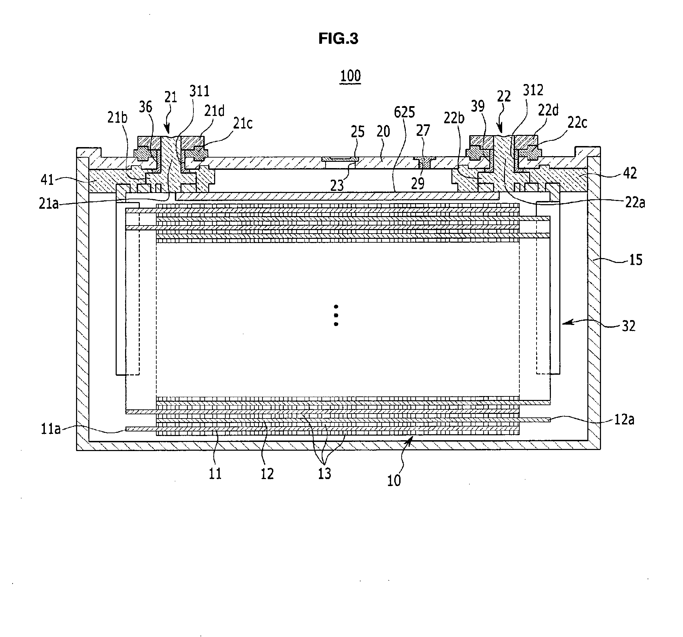

FIG. 1 is a perspective view of a rechargeable battery according to a first exemplary embodiment of the present invention, FIG. 2 is a cross-sectional view taken along line II - II of FIG. 1, and FIG. 3 is a cross-sectional view taken along line III-III of FIG. 2.

Referring to FIGS. 1 to 3, a rechargeable battery 100 according to the first exemplary embodiment includes an electrode assembly 10, a casing 15 configured to have the electrode assembly 10 embedded therein, a cap plate 20 connected to the opening of the casing 15, first and second electrode terminals 21 and 22 disposed in the cap plate 20, and elastic members 71 and 72 disposed between the casing 15 and the electrode assembly 10. There may be one or more electrode assemblies 10.

The rechargeable battery 100 according to the first exemplary embodiment illustrates a lithium ion rechargeable battery of a rectangular shape. However, the present invention is not limited to the first exemplary embodiment and can be applied to various forms of rechargeable batteries, such as a lithium polymer rechargeable battery and a cylindrical rechargeable battery.

Referring to FIG. 3, the electrode assembly 10 has a negative electrode 11 and a positive electrode 12 disposed on respective sides of a separator 13 (that is, an insulator), and the negative electrode 11, the separator 13, and the positive electrode 12 are wound in a jelly roll type.

Further, the electrode assembly can be assembled by laminating the negative electrode and the positive electrode, consisting of a single plate, with the separator interposed therebetween, or can be assembled by zigzag-folding the negative electrode, the separator, and the positive electrode and laminating them (not shown).

Each of the negative electrode 11 and the positive electrode 12 includes a coating portion in which an active material is coated on the current collector of a metal plate and uncoated portions 11 a and 12a formed of exposed current collectors on which an active material is not coated.

The uncoated portion 11 a of the negative electrode 11 is formed at one end of the negative electrode 11 along the wound negative electrode 11. The uncoated portion 12a of the positive electrode 12 is formed at one end of the positive electrode 12 along the wound positive electrode 12. Accordingly, the uncoated portions 11 a and 12a are respectively disposed at opposite ends of the electrode assembly 10.

The number of electrode assemblies 10 is plural. Accordingly, in the electrode assemblies 10, the negative electrodes 11 are electrically connected through a negative electrode current collection lead tab 31, and the positive electrodes 12 are electrically connected through a positive electrode current collection lead tab 32. Although not shown, the present invention can also be applied to a rechargeable battery in which the number of electrode assembly is one.

For example, the casing 15 can have an approximately cuboid shape so that the space for housing the electrode assembly 10 and an electrolyte solution can be defined, and an opening for connecting external and internal spaces can be formed on one side of the cuboid. The electrode assembly 10 is inserted into the casing 15 through the opening.

The cap plate 20 is made of a thin sheet material and disposed in the opening of the casing 15. The cap plate 20 closes and seals the casing 15. The cap plate 20 further includes an electrolyte solution injection port 29 and a vent hole 24. After the electrolyte solution is injected, the electrolyte solution injection port 29 is sealed with a sealing plug 27.

The internal pressure of the rechargeable battery 100 can be discharged through the vent hole 24, which is closed and sealed by a vent plate 25. The first and second electrode terminals 21 and 22 are disposed to penetrate the cap plate 20 and are electrically connected to the electrode assembly 10. That is, the first and second electrode terminals 21 and 22 are electrically connected to the negative electrode 11 and the positive electrode 12 of the electrode assembly 10, respectively. Accordingly, the electrode assembly 10 is electrically drawn out of the casing 15 through the first and second electrode terminals 21 and 22.

The first and second electrode terminals 21 and 22 include respective pole units 21 a and 22a disposed in terminal holes 311 and 312 formed in the cap plate 20, respective flanges 21 b and 22b formed in the pole units 21 a and 22a inside the casing 15, and terminal plates 21 d and 22d disposed outside of the casing 15 and connected to the pole units 21 a and 22a.

The terminal plates 21 d and 22d are connected to the terminal plates (not shown) of neighboring rechargeable batteries through bus bars (not shown) so that the rechargeable batteries 100 can be coupled together in series or in parallel.

On the side of the first electrode terminal 21, a negative electrode gasket 36 is disposed between the pole unit 21 a of the first electrode terminal 21 and the inside of the terminal hole 311 of the cap plate 20 and configured to seal the space between the pole unit 21 a of the first electrode terminal 21 and the terminal hole 311 of the cap plate 20. The negative electrode gasket 36 is further extended between the flange 21 b and the cap plate 20 and configured to seal the space between the flange 21 b and the cap plate 20. That is, the first electrode terminal 21 is disposed in the cap plate 20, and thus the negative electrode gasket 36 prevents an electrolyte solution from leaking through the terminal hole 311.

On the side of the second electrode terminal 22, a positive electrode gasket 39 is disposed between the pole unit 22a of the second electrode terminal 22 and the inside of the terminal hole 312 of the cap plate 20 and configured to seal the space between the pole unit 22a of the second electrode terminal 22 and the terminal hole 312 of the cap plate 20. The positive electrode gasket 39 is further extended between the flange 22b and the cap plate 20 and configured to seal the space between the flange 22b and the cap plate 20.

That is, the second electrode terminal 22 is disposed in the cap plate 20, and thus the positive electrode gasket 39 prevents an electrolyte solution from leaking through the terminal hole 312.

Further, the cap plate 21c and the terminal plate 21 are insulated with each of insulating members 21 c and 22c interposed therebetween.

The negative electrode and positive electrode current collection lead tabs 31 and 32 electrically connect the first and second electrode terminals 21 and 22 to the negative and positive electrodes 11 and 12 of the electrode assembly 10, respectively. That is, since the negative electrode and positive electrode current collection lead tabs 31 and 32 are connected to the bottoms of the pole units 21 a and 22a and the bottoms are cocked, the negative electrode and positive electrode current collection lead tabs 31 and 32 are supported by the flanges 21 b and 22b and are also connected to the bottoms of the pole units 21 a and 22a.

The negative electrode and positive electrode current collection lead tabs 31 and 32 have the same structure. Thus, a detailed description of the positive electrode current collection lead tab 32 is omitted, and a construction in which the negative electrode current collection lead tab 31 is connected to four electrode assemblies 10 is described as an example.

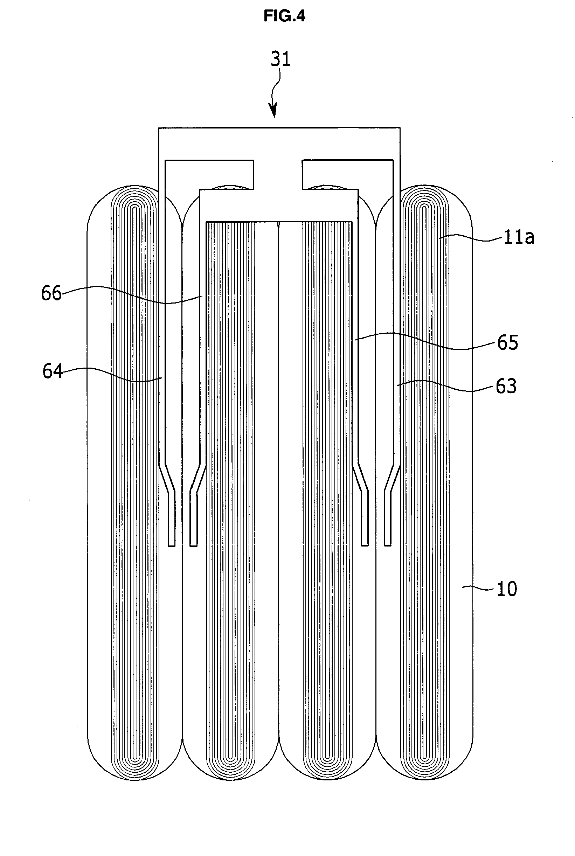

FIG. 4 is a lateral view showing a state in which electrode assemblies and a negative electrode current collector lead tab are connected in the rechargeable battery of FIG. 1. Referring to FIG. 4, the negative electrode current collection lead tab 31 includes first, second, third, and fourth electrode assembly joining units 63, 64, 65, and 66 connected to the first electrode terminal 21 and inserted between the electrode assemblies 10.

The four electrode assemblies 10 are disposed to overlap with each other, and the uncoated portions 11 a and 12a are respectively formed at opposite ends of the four electrode assemblies 10. In FIG. 4, the uncoated portions 11 a of the negative electrode 11 have a smaller thickness than a coating portion on which an active material is coated, and thus a space is formed between the uncoated portions 11 a. The first, second, third, and fourth electrode assembly joining units 63, 64, 65, and 66 are inserted and disposed in the space between the uncoated portions 11 a.

The first, second, third, and fourth electrode assembly joining units 63, 64, 65, and 66 are bent and formed in parallel, disposed in parallel with the uncoated portions 11a of the negative electrode 11, and bonded to the uncoated portions 11a by ultrasonic welding.

Referring to FIG. 3, negative electrode and positive electrode insulating members 41 and 42 are disposed between the respective negative electrode and positive electrode current collection lead tabs 31 and 32 and the cap plate 20, and are configured to electrically insulate the respective negative electrode and positive electrode current collection lead tabs 31 and 32 and the cap plate 20.

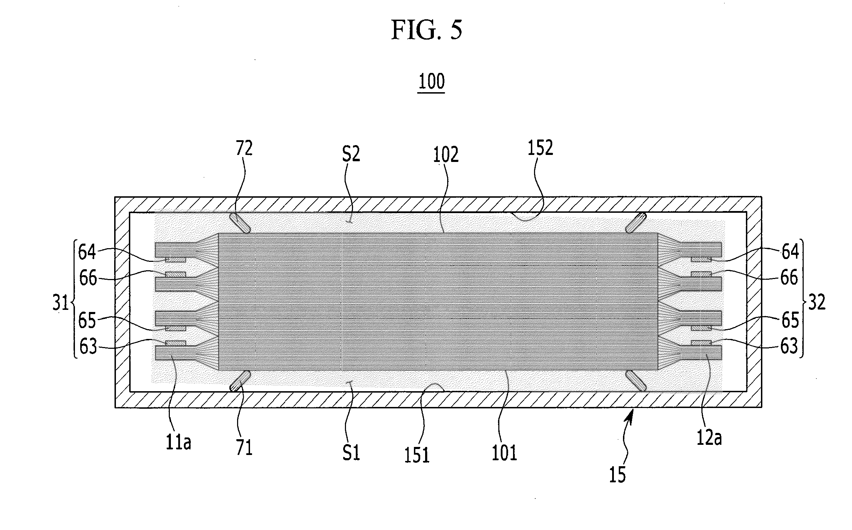

FIG. 5 is a cross-sectional view taken along line V - V of FIG. 1. Referring to FIGS. 2 and 5, elastic members 71 and 72 are disposed in respective spaces S1 and S2 defined between the casing 15 and the electrode assemblies 10. That is, the elastic members 71 and 72 are disposed between the respective electrode assemblies 10, and are disposed at the outside from among the plurality of electrode assemblies 10 and the inside of the casing 15 and configured to elastically support the electrode assemblies 10.

The elastic members 71 and 72 support the electrode assemblies 10 at a predetermined pressure by means of reaction of the casing 15, caused by self-elasticity, before the rechargeable battery 100 is first used, thus being capable of maintaining gaps between the negative electrode 11, the separator 13, and the positive electrode 12 within a predetermined range. Accordingly, when the rechargeable battery 100 is first used, the generation of gas can be suppressed and thus cell swelling can be suppressed.

The elastic members 71 and 72 are disposed at the outer areas within the spaces S1 and S2 defined between the electrode assemblies 10 and the casing 15 and configured to support the electrode assemblies 10. Accordingly, the elastic members 71 and 72 can distribute expansion force, generated at a central portion of the electrode assemblies 10 while the rechargeable battery 100 is used, to the outside of the casing 15.

In terms of the structure, the casing 15 has the greatest mechanical stiffness at the outer areas. Since the elastic members 71 and 72 support the outer areas of the electrode assemblies 10, cell swelling can be effectively prevented. Herein, outer areas of the electrode assemblies 10 preferably refer to lateral surface areas of the electrode assemblies 10 facing the casing 15 that are located closer to the cap plate 20 or the bottom of the casing 15, respectively, than to the center line of the electrode assemblies 10.

As illustrated, the casing 15 has the cuboid form and thus has first and second inner faces 151 and 152 (that is, two faces having a wide rectangular area from among the six faces). The electrode assemblies 10 are defined in portions other than the uncoated portions 11 a and 12a, and they have first and second outer faces 101 and 102 corresponding to the first and second inner faces 151 and 152. The first and second outer faces 101 and 102 are the outermost faces disposed at the outside of the plurality of electrode assemblies 10, and may be both sides of one electrode assembly 10 (not shown).

The elastic members 71 and 72 are disposed in response to the first and second inner faces 151 and 152 and the outsides of the first and second outer faces 101 and 102 in the respective spaces S1 and S2. The elastic members 71 and 72 can be made of a metal, prederably stainless steel or a copper alloy. Alternatively the elastic members 71 and 72 may be formed of an insulating material, preferably an insulatingresin, poly-viyl and/or plastic. The elastic member 71 disposed between the first inner face 151 and the first outer face 101 of the space S1 is exemplarily described, for convenience of description.

The elastic member 71 preferably has a tapered form with a hole in its center. Particularly, the elastic member 71 can have:
an elliptical shape or a rectangular shape with curved edges, and/or
the form of a convex closed loop, and/or
the form of a disrupted or segmented loop, and/or
is bulging inwards towards the electrode assembly 10.

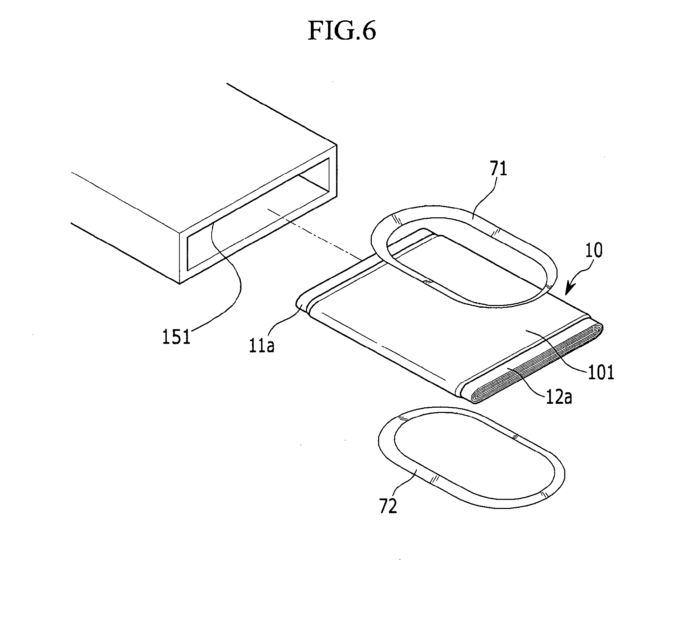

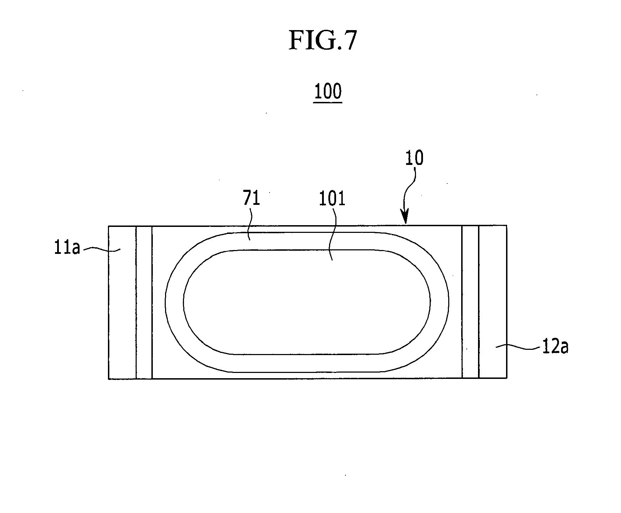

FIG. 6 is an exploded perspective view of the electrode assembly and the elastic members of FIG. 3, and FIG. 7 is a top plan view of FIG. 6. Referring to FIGS. 6 and 7, the elastic members 71 and 72 are formed of Belleville springs. That is, each of the elastic members 71 and 72 is formed by forming a belt, forming a closed curve having a predetermined width, in a plate form.

The elastic member 71 is formed to correspond to the outer areas of the first inner face 151 and the first outer face 101 in the space S1. For example, the elastic member 71 is formed of half circles of a belt form on the short sides of the first outer face 101 of the electrode assembly 10 and of straight lines of a belt form connecting both sides of the half circles on the long side thereof.

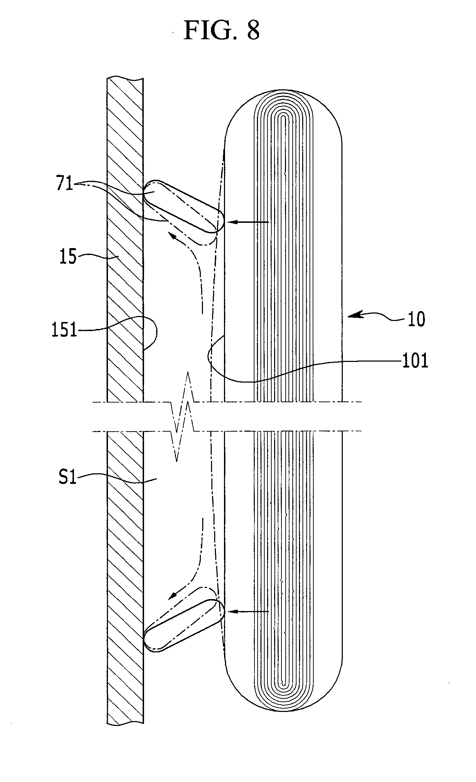

FIG. 8 is a cross-sectional view showing the operation of the elastic members disposed between the electrode assembly and the casing. Referring to FIG. 8, the elastic member 71 is supported by the first inner face 151 in response to expansion (that is, imaginary line state) of the electrode assembly 10 and is configured to slide and move (that is, imaginary line state) from the outer areas of the first outer face 101 of the electrode assembly 10 to the center thereof, thereby absorbing and transferring the expansion force of the electrode assembly 10.

That is, the elastic member 71 receives expansion force generated at the center of the electrode assembly 10 while the rechargeable battery 100 is used through the half circle and straight line forms, and uniformly distributes the received expansion force to the long and short sides of the first inner wall 151 that are the outer areas of the casing 15 (refer to the imaginary line arrow).

A portion having the greatest mechanical stiffness in the casing 15 is the outer areas, and the greatest expansion force generated at the central portion of the electrode assembly 10 is distributed to the outer areas of the casing 15. Accordingly, cell swelling can be effectively suppressed. Even after the rechargeable battery 100 is used for a predetermined time, the gaps between the negative electrode 11, the separator 13, and the positive electrode 12 of the electrode assembly 10 can be maintained within a predetermined range.

Hereinafter, another exemplary embodiment of the present inventions is described. A description of the same construction as that of the first exemplary embodiment and the above-described exemplary embodiment is omitted for simplicity.

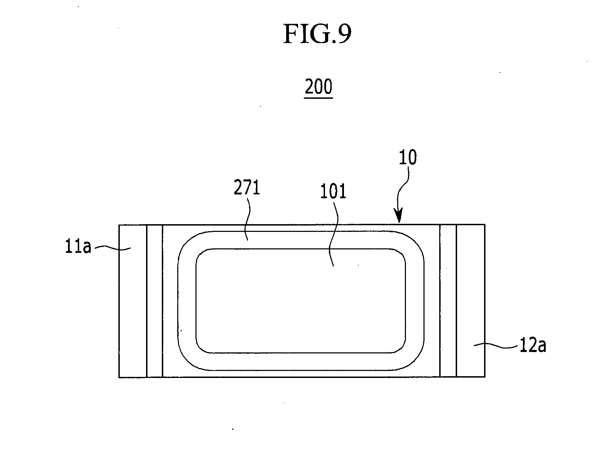

FIG. 9 is a top plan view showing the arrangement relationship of an electrode assembly and an elastic member in a rechargeable battery 200 according to a second exemplary embodiment of the present invention. Referring to FIG. 9, the rechargeable battery 200 of the second exemplary embodiment includes an elastic member 271 in which a portion connecting the long and short sides of the first outer face 101 in the electrode assembly 10 forms a 1/4 circle of a belt form, and a straight line of a belt form connects the 1/4 circles along the long and short sides of the first outer face 101.

Accordingly, the elastic member 271 receives expansion force generated at the center of the electrode assembly 10 while the rechargeable battery 200 is used through the 1/4 circle and straight line forms and uniformly distributes the received expansion force to the long and short sides of the first inner wall 151 which are the outer areas of the casing 15 (refer to the imaginary line arrow).

In the elastic member 271 of the second exemplary embodiment, the 1/4 circles are connected by the straight line. Accordingly, the expansion force of the electrode assembly 10 can be further transferred and distributed to the outer areas of the casing 15, as compared with the elastic member 71 of the first exemplary embodiment in which the half circles are connected by the straight line. From a viewpoint of cell swelling suppression, the first elastic member 271 of the second exemplary embodiment can be more advantageous than the elastic member 71 of the first exemplary embodiment.

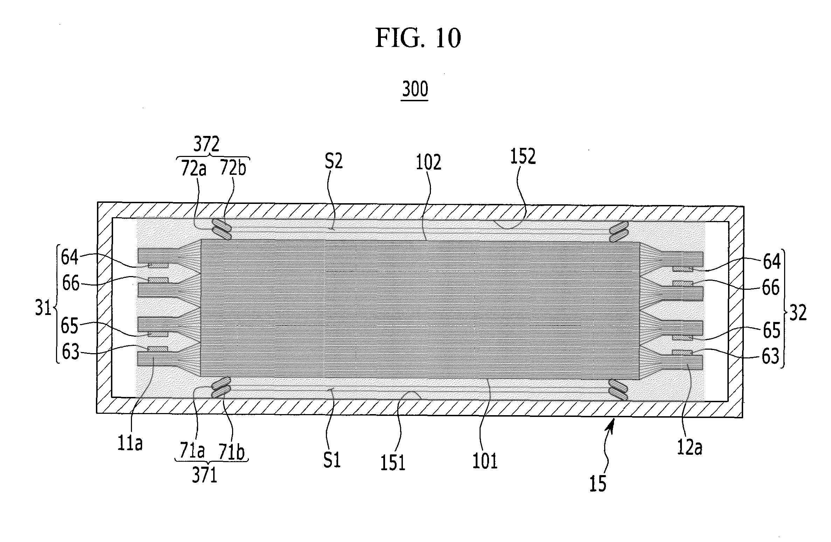

FIG. 10 is a cross-sectional view of a rechargeable battery 300 according to a third exemplary embodiment of the present invention. Referring to FIG. 10, in the rechargeable battery 300 of the third exemplary embodiment, each of elastic members 371 and 372 is formed of two plate springs. That is, the elastic members 371 and 372 include respective inside elastic members 71 a and 72a and respective outside elastic members 71 b and 72b that are disposed in a surface contact structure.

The inside elastic members 71 a and 72a are associated with the first and second outer faces 101 and 102 of the electrode assemblies 10, respectively, in spaces S1 and S2. The outside elastic members 71 b and 72b are associated with the first and second inner faces 151 and 152 of a casing 15, respectively, in the spaces S1 and S2.

Accordingly, the expansion force of the first and second outer faces 101 and 102 of the electrode assemblies 10 is transferred to the inside elastic members 71 a and 72a. Next, the expansion force is transferred to the first and second inner faces 151 and 152 of the casing 15 through the outside elastic members 71 b and 72b.

The elastic members 371 and 372 of the third exemplary embodiment are formed of the two plate springs. Accordingly, reliability in which the expansion force of the electrode assemblies 10 is transferred and distributed to the casing 15 can be improved, as compared with the elastic member 71 of the first exemplary embodiment using one plate spring.

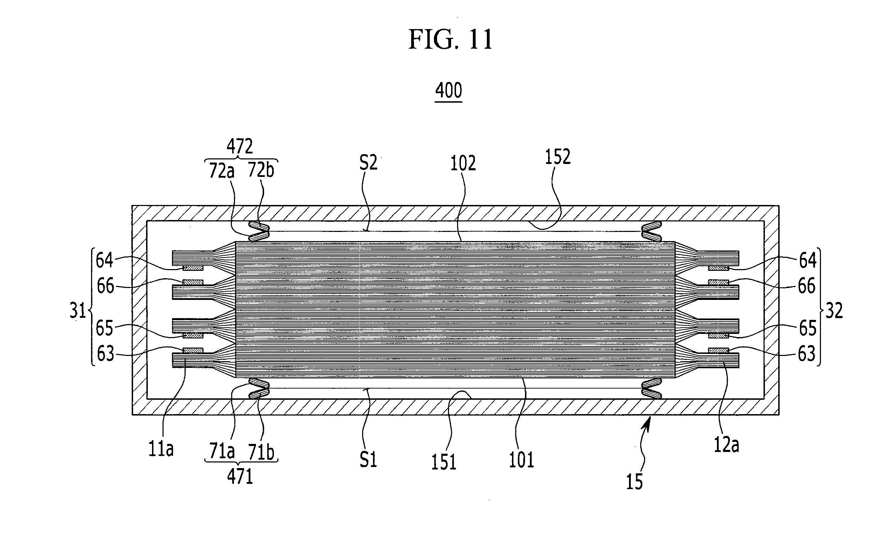

FIG. 11 is a cross-sectional view of a rechargeable battery 400 according to a fourth exemplary embodiment of the present invention. Referring to FIG. 11, in the rechargeable battery 400 of the fourth exemplary embodiment, each of elastic members 471 and 472 is formed of two plate springs. The elastic members 471 and 472 include respective inside elastic members 71 a and 72a and respective outside elastic members 71 b and 72b that are disposed in a line contact structure.

The inside elastic members 71 a and 72a correspond to the first and second outer faces 101 and 102 of the electrode assemblies 10, respectively, in spaces S1 and S2. The outside elastic members 71 b and 72b correspond to the first and second inner faces 151 and 152 of the casing 15, respectively, in the spaces S1 and S2.

Accordingly, the expansion force of the first and second outer faces 101 and 102 of the electrode assemblies 10 is transferred to the inside elastic members 71 a and 72a. Next, the expansion force is transferred and distributed to the first and second inner faces 151 and 152 of the casing 15 through the outside elastic members 71 b and 72b.

The elastic members 471 and 472 of the fourth exemplary embodiment are disposed in the line contact structure and are mutually elastically supported. Accordingly, the expansion force of the electrode assemblies 10 can be mitigated and absorbed between the inside elastic members 71 a and 72a and the outside elastic members 71b and 72b before the expansion force is transferred and distributed to the casing 15, as compared with the elastic members 371 and 372 of the third exemplary embodiment that are overlapped and disposed in the area contact structure.

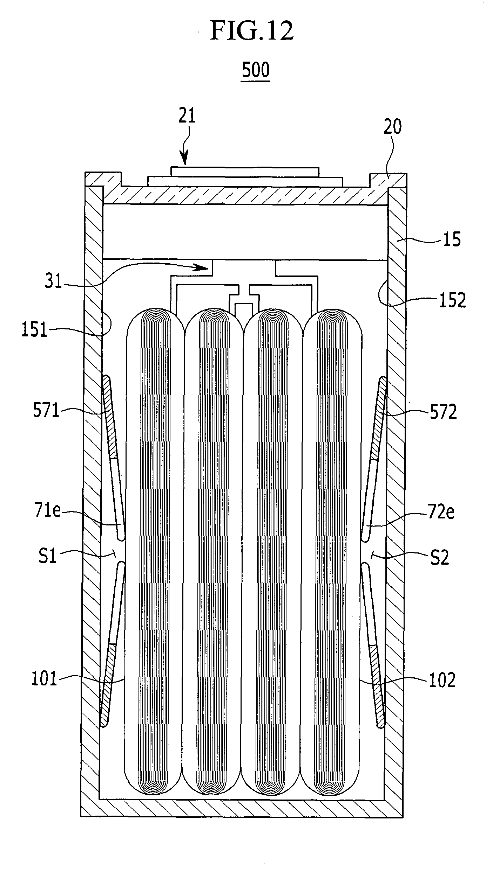

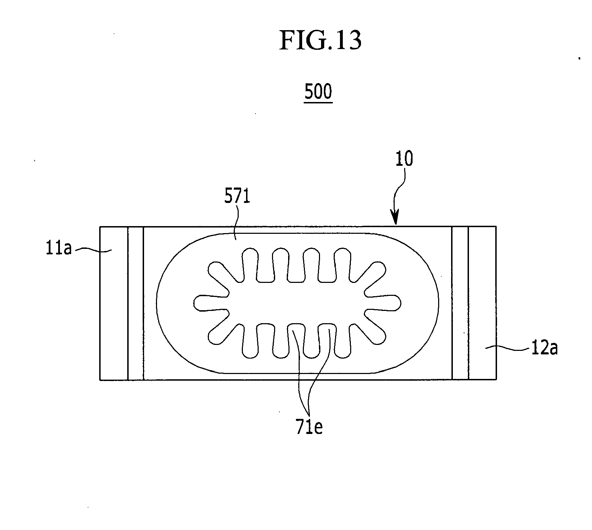

FIG. 12 is a cross-sectional view of a rechargeable battery 500 according to a fifth exemplary embodiment of the present invention, and FIG. 13 is a lateral view showing the arrangement of an electrode assembly and an elastic member shown in FIG. 12.

Referring to FIGS. 12 and 13, in the rechargeable battery 500 according to the fifth exemplary embodiment, elastic members 571 and 572 are formed of respective slotted disk springs.

The elastic members 571 and 572 are associated with the first and second outer faces 101 and 102 of electrode assemblies 10, respectively, and to the first and second inner faces 151 and 152 of the casing 15, respectively, in respective spaces S1 and S2. Here, extension units 71 e and 72e extended from the elastic members 571 and 572 to the center of the rechargeable battery 500 support the central portions of the first and second outer faces 101 and 102 of the electrode assemblies 10.

Accordingly, the expansion force of the first and second outer faces 101 and 102 of the electrode assemblies 10 is transferred to the inside elastic members 571 and 572. Next, the expansion force is transferred and distributed to the first and second inner faces 151 and 152 of the casing 15.

At this time, the extension units 71e and 72e support the central potion of the electrode assemblies 10 at which the expansion force is a maximum. Accordingly, the expansion force of the central portion is distributed to the outer areas of the electrode assemblies 10 and simultaneously transferred and distributed to the outer areas of the casing 15.

The elastic members 571 and 572 of the fifth exemplary embodiment are formed of the slotted disk springs and configured to the central portion of the electrode assemblies 10. Accordingly, expansion force generated at the central portion of the electrode assemblies 10 can be distributed to the outer areas of the electrode assemblies 10 and simultaneously transferred and distributed to the outer areas of the casing 15, as compared with the elastic members 71 and 72 of the first exemplary embodiment formed of the plate springs.

## Claims

1. A rechargeable battery (100) comprising:
an electrode assembly (10);
a case (15) for accommodating the electrode assembly (10) therein;
**characterized in that**
a first elastic member (71) is provided between the electrode assembly (10) and the case (15), wherein a section through the first elastic member (71) from an electrode assembly facing side to a case facing side has a tapered outer form with a correspondingly tapered hole in its center wherein the tapered hole and the tapered outer form have smaller widths on the electrode assembly facing side than on the case facing side.

2. Rechargeable battery (100) of claim 1, wherein the first elastic member (71):
has an elliptical shape or a rectangular shape with curved edges, and/or
has the form of a convex closed loop, and/or
has the form of a disrupted or segmented loop, and/or
is bulging inwards towards the electrode assembly (10).

3. Rechargeable battery (100) of any of the previous claims, wherein the first elastic member (71) contacts an inner wall of the case (15) and/or an outer wall of the electrode assembly (10).

4. Rechargeable battery (100) of any of the previous claims, wherein the first elastic member (71) is provided parallel to a side wall of the electrode assembly (10) and parallel to a side wall of the case (15), wherein the first elastic member (71) provides a resilient force perpendicular to the side wall of the electrode assembly (10) and the side wall of the case (15).

5. Rechargeable battery (100) of any of the previous claims, wherein the normal projection of the center point of the first elastic member (71) is located within the central area of a side wall of the electrode assembly (10) the first elastic member (71) faces.

6. Rechargeable battery (100) of any of the previous claims, wherein the height of the first elastic member (71) in an uncompressed state is equal to or larger than the size of a gap (S1) between the electrode assembly (10) and the case (15) where the first elastic member is provided in.

7. Rechargeable battery (100) of any of the previous claims, wherein the first elastic member (71) has inclined side walls such that its cross section parallel to the side wall it faces decreases from the case (15) towards the electrode assembly (10).

8. Rechargeable battery (500) of any of the previous claims, wherein the inner circumference of the first elastic member (571) is provided with elastic projections (71 e) projecting into the central hole of the first elastic member (571) and contacting the electrode assembly (10).

9. Rechargeable battery (100) of any of the previous claims, wherein the first elastic member (71) is formed of a metal, preferably stainless steel or a copper alloy, or consists of an insulating material, preferably an insulating resin, poly-vinyl and/or plastic.

10. Rechargeable battery (300, 400) of any of the previous claims, wherein a second elastic member (71 b) is provided between the first elastic member (71 a) and the electrode assembly (10).

11. Rechargeable battery (300, 400) of claim 10, wherein the second elastic member (71 b) has a convex shape bulging inward toward the electrode assembly (10) or outward toward the first elastic member (71 a).

12. Rechargeable battery (100) of any of the previous claims, wherein the first elastic member (71, 71 a) and/or the second elastic member (71 b) is a Belleville spring or plate spring or slotted disk spring.

13. Rechargeable battery (100) of any of the previous claims, wherein the contact points of the first elastic member (71) and the case (15) are located within a periphery of a normal projection of the top and bottom ends of the electrode assembly (10).

14. Rechargeable battery (100) of any of the previous claims, wherein the first and/or second elastic members (71, 71 a, 71 b) are provided on two opposing sides of the electrode assembly (10).

15. Rechargeable battery (100) of any of the previous claims, wherein the contact points of the first elastic member (71) and the case (15) and/or the contact points of the first or second elastic member (71, 71 a, 71 b) and the electrode assembly (10):
are distributed over the side wall of the electrode assembly the elastic members face, and/or
form a line, or a closed loop, or an interrupted or segmented loop.

## Patentansprüche

1. Wiederaufladbare Batterie (100), aufweisend:
eine Elektrodenanordnung (10);
ein Gehäuse (15) zum Aufnehmen der Elektrodenanordnung (10) darin;
**dadurch gekennzeichnet, dass**
ein erstes elastisches Glied (71) zwischen der Elektrodenanordnung (10) und dem Gehäuse (15) bereitgestellt wird, wobei ein Schnitt durch das erste elastische Glied (71) von einer der Elektrodenanordnung zugewandten Seite zu einer dem Gehäuse zugewandten Seite eine konische äußere Form mit einem entsprechend konischen Loch in ihrer Mitte aufweist, wobei das konische Loch und die konische äußere Form kleinere Breiten auf der der Elektrodenanordnung zugewandten Seite aufweisen als auf der dem Gehäuse zugewandten Seite.

2. Wiederaufladbare Batterie (100) nach Anspruch 1, wobei das erste elastische Glied (71):
eine elliptische Form oder eine rechteckige Form mit gekrümmten Rändern aufweist, und/oder
die Form einer konvexen geschlossenen Schleife aufweist, und/oder die Form einer unterbrochenen oder segmentierten Schleife aufweist, und/oder
sich nach innen zur Elektrodenanordnung (10) wölbt.

3. Wiederaufladbare Batterie (100) nach einem der vorhergehenden Ansprüche, wobei das erste elastische Glied (71) mit einer Innenwand des Gehäuses (15) und/oder einer Außenwand der Elektrodenanordnung (10) in Kontakt steht.

4. Wiederaufladbare Batterie (100) nach einem der vorhergehenden Ansprüche, wobei das erste elastische Glied (71) parallel zu einer Seitenwand der Elektrodenanordnung (10) und parallel zu einer Seitenwand des Gehäuses (15) bereitgestellt wird, wobei das erste elastische Glied (71) eine Federkraft perpendikulär zur Seitenwand der Elektrodenanordnung (10) und der Seitenwand des Gehäuses (15) bereitstellt.

5. Wiederaufladbare Batterie (100) nach einem der vorhergehenden Ansprüche, wobei sich die Normalprojektion des Mittelpunkts des ersten elastischen Glieds (71) im mittleren Bereich einer Seitenwand der Elektrodenanordnung (10), der das erste elastischen Glied (71) zugewandt ist, befindet.

6. Wiederaufladbare Batterie (100) nach einem der vorhergehenden Ansprüche, wobei die Höhe des ersten elastischen Glieds (71) in einem nicht komprimierten Zustand gleich der oder größer als die Größe einer Lücke (S1) zwischen der Elektrodenanordnung (10) und dem Gehäuse (15), in der das erste elastische Glied bereitgestellt wird, ist.

7. Wiederaufladbare Batterie (100) nach einem der vorhergehenden Ansprüche, wobei das erste elastische Glied (71) schräge Seitenwände derart aufweist, dass sein Querschnitt parallel zur Seitenwand, der es zugewandt ist, vom Gehäuse (15) zur Elektrodenanordnung (10) hin abnimmt.

8. Wiederaufladbare Batterie (500) nach einem der vorhergehenden Ansprüche, wobei der Innenumfang des ersten elastischen Glieds (571) mit elastischen Vorsprüngen (71e), die in das mittlere Loch des ersten elastischen Glieds (571) hineinragen und mit der Elektrodenanordnung (10) in Kontakt stehen, bereitgestellt wird.

9. Wiederaufladbare Batterie (100) nach einem der vorhergehenden Ansprüche, wobei das erste elastische Glied (71) aus einem Metall, vorzugsweise aus rostfreiem Stahl oder einer Kupferlegierung, ausgebildet ist, oder aus einem Isoliermaterial, vorzugsweise aus Isolierharz, Polyvinyl und/oder Kunststoff, besteht.

10. Wiederaufladbare Batterie (300, 400) nach einem der vorhergehenden Ansprüche, wobei ein zweites elastisches Glied (71b) zwischen dem ersten elastischen Glied (71a) und der Elektrodenanordnung (10) bereitgestellt wird.

11. Wiederaufladbare Batterie (300, 400) nach Anspruch 10, wobei das zweite elastische Glied (71b) eine konvexe Form, die sich nach innen zur Elektrodenanordnung (10) oder nach außen zum ersten elastischen Glied (71a) wölbt, aufweist.

12. Wiederaufladbare Batterie (100) nach einem der vorhergehenden Ansprüche, wobei das erste elastische Glied (71, 71a) und/oder das zweite elastische Glied (71b) eine Belleville Feder oder geschlitzte Tellerfeder sind/ist.

13. Wiederaufladbare Batterie (100) nach einem der vorhergehenden Ansprüche, wobei sich die Kontaktpunkte des ersten elastischen Glieds (71) und des Gehäuses (15) innerhalb eines Umfangs einer Normalprojektion des oberen und unteren Endes der Elektrodenanordnung (10) befinden.

14. Wiederaufladbare Batterie (100) nach einem der vorhergehenden Ansprüche, wobei das erste und/oder zweite elastische Glied (71, 71a, 71b) auf zwei gegenüberliegenden Seiten der Elektrodenanordnung (10) bereitgestellt werden.

15. Wiederaufladbare Batterie (100) nach einem der vorhergehenden Ansprüche, wobei die Kontaktpunkte des ersten elastischen Glieds (71) und des Gehäuses (15) und/oder die Kontaktpunkte des ersten oder zweiten elastischen Glieds (71, 71a, 71b) und der Elektrodenanordnung (10):
über die Seitenwand der Elektrodenanordnung, der die elastischen Glieder zugewandt sind, verteilt sind,
und/oder
eine Linie oder eine geschlossene Schleife oder eine unterbrochene oder segmentierte Schleife ausbilden.

## Revendications

1. Batterie rechargeable (100) comprenant :
un ensemble d'électrodes (10) ;
un boîtier (15) pour loger l'ensemble d'électrodes (10) à l'intérieur de ce dernier ;
**caractérisée en ce que** :
un premier élément élastique (71) est prévu entre l'ensemble d'électrodes (10) et le boîtier (15), dans lequel une section passant par le premier élément élastique (71) à partir d'un côté faisant face à l'ensemble d'électrodes jusqu'à un côté faisant face au boîtier a une forme externe progressivement rétrécie avec un trou progressivement rétréci proportionnellement dans son centre, le trou progressivement rétréci et la forme externe progressivement rétrécie ayant de plus petites largeurs du côté faisant face à l'ensemble d'électrodes que du côté faisant face au boîtier.

2. Batterie rechargeable (100) selon la revendication 1, dans laquelle le premier élément élastique (71) :
a une forme elliptique ou une forme rectangulaire avec des bords incurvés, et/ou
a la forme d'une boucle fermée convexe, et/ou
a la forme d'une boucle interrompue ou segmentée, et/ou
est renflé vers l'intérieur vers l'ensemble d'électrodes (10).

3. Batterie rechargeable (100) selon l'une quelconque des revendications précédentes, dans laquelle le premier élément élastique (71) est en contact avec une paroi interne du boîtier (15) et/ou une paroi externe de l'ensemble d'électrodes (10).

4. Batterie rechargeable (100) selon l'une quelconque des revendications précédentes, dans laquelle le premier élément élastique (71) est prévu parallèlement à une paroi latérale de l'ensemble d'électrodes (10) et parallèlement à une paroi latérale du boîtier (15), dans laquelle le premier élément élastique (71) fournit une force résiliente perpendiculaire à la paroi latérale de l'ensemble d'électrodes (10) et à la paroi latérale du boîtier (15).

5. Batterie rechargeable (100) selon l'une quelconque des revendications précédentes, dans laquelle la saillie normale du point central du premier élément élastique (71) est positionnée à l'intérieur de la zone centrale d'une paroi latérale de l'ensemble d'électrodes (10) à laquelle le premier élément élastique (71) fait face.

6. Batterie rechargeable (100) selon l'une quelconque des revendications précédentes, dans laquelle la hauteur du premier élément élastique (71) dans un état non comprimé est égale ou supérieure à la taille d'un espace (S1) situé entre l'ensemble d'électrodes (10) et le boîtier (15) dans lequel est prévu le premier élément élastique.

7. Batterie rechargeable (100) selon l'une quelconque des revendications précédentes, dans laquelle le premier élément élastique (71) a des parois latérales inclinées de sorte que sa section transversale parallèle à la paroi latérale à laquelle il fait face, diminue du boîtier (15) vers l'ensemble d'électrodes (10).

8. Batterie rechargeable (100) selon l'une quelconque des revendications précédentes, dans laquelle la circonférence interne du premier élément élastique (571) est prévue avec des saillies élastiques (71e) faisant saillie dans le trou central du premier élément élastique (571) et en contact avec l'ensemble d'électrodes (10).

9. Batterie rechargeable (100) selon l'une quelconque des revendications précédentes, dans laquelle le premier élément élastique (71) est formé à partir d'un métal, de préférence de l'acier inoxydable ou un alliage de cuivre, ou se compose d'un matériau isolant, de préférence une résine isolante, du polyvinyle et/ou du plastique.

10. Batterie rechargeable (300, 400) selon l'une quelconque des revendications précédentes, dans laquelle un second élément élastique (71b) est prévu entre le premier élément élastique (71a) et l'ensemble d'électrodes (10).

11. Batterie rechargeable (300, 400) selon la revendication 10, dans laquelle le second élément élastique (71b) a une forme convexe se renflant vers l'intérieur vers l'ensemble d'électrodes (10) ou vers l'extérieur vers le premier élément élastique (71a).

12. Batterie rechargeable (100) selon l'une quelconque des revendications précédentes, dans laquelle le premier élément élastique (71, 71a) et/ou le second élément élastique (71b) est un ressort Belleville ou un ressort à lames ou un ressort à disque fendu.

13. Batterie rechargeable (100) selon l'une quelconque des revendications précédentes, dans laquelle les points de contact du premier élément élastique (71) et du boîtier (15) sont positionnés à l'intérieur d'une périphérie d'une saillie normale des extrémités supérieure et inférieure de l'ensemble d'électrodes (10).

14. Batterie rechargeable (100) selon l'une quelconque des revendications précédentes, dans laquelle les premier et/ou second éléments élastiques (71, 71a, 71b) sont prévus sur deux côtés opposés de l'ensemble d'électrodes (10).

15. Batterie rechargeable (100) selon l'une quelconque des revendications précédentes, dans laquelle les points de contact du premier élément élastique (71) et du boîtier (15) et/ou les points de contact du premier ou second élément élastique (71, 71a, 71b) et de l'ensemble d'électrodes (10) :
sont répartis sur la paroi latérale de l'ensemble d'électrodes à laquelle les éléments élastiques font face, et/ou
forment une ligne, ou une boucle fermée, ou une boucle interrompue ou segmentée.
